# EUROPÄISCHE PATENTSCHRIFT

(11) **EP 3 053 806 B1**
(45) Veröffentlichungstag und Bekanntmachung des Hinweises auf die Patenterteilung: **13.03.2019**
(21) Anmeldenummer: 15189178.5
(22) Anmeldetag: 09.10.2015
(51) Int. Cl.: B62D 5/00, B62D 5/04

(54) **LENKANTRIEB UND LENKSYSTEM FÜR EIN FAHRZEUG**
STEERING DRIVE AND STEERING SYSTEM FOR A VEHICLE
MECANISME DE DIRECTION ET SYSTEME DE DIRECTION POUR UN VEHICULE

(30) Priorität: 05.12.2014 DE 102014224970
(43) Veröffentlichungstag der Anmeldung: 10.08.2016
(73) Patentinhaber: Robert Bosch GmbH, 70442 Stuttgart (DE)
(72) Erfinder: Schindele, Lothar, 71272 Renningen (DE); Walter, Gerhard, 70839 Gerlingen (DE)

(56) Entgegenhaltungen:
- AT-U1- 6 683
- DE-A1-102005 030 259
- DE-A1-102007 058 143
- FR-A1- 2 887 839
- JP-A- 2001 310 751
- KR-B1- 101 428 073
- US-A1- 2001 032 762
- US-A1- 2011 132 682

## Beschreibung

### Stand der Technik

Die Erfindung betrifft einen Lenkantrieb für ein Fahrzeug nach dem Oberbegriff des Anspruchs 1. Ferner betrifft die Erfindung ein Lenksystem für ein Fahrzeug mit wenigstens einem erfindungsgemäßen Lenkantrieb.

Aus der DE 100 15 050 A1 ist ein Lenkantrieb für ein Fahrzeug nach dem Oberbegriff des Anspruchs 1 bekannt, der als sogenannter "Steer-by-wire" Antrieb ausgebildet ist. Hierzu ist es vorgesehen, dass der Lenkwunsch des Fahrers über eine mit dem Lenkrad verbundene Sensorik erfasst und über eine Kabelverbindung an zwei Stellmotoren als Eingangsgröße zugeführt wird, die an einem Stellelement an gegenüberliegenden Enden angeordnet sind. Die beiden Stellmotoren sind über Spurstangen mit den Rädern gekoppelt, derart, dass durch eine entsprechende Betätigung der Stellmotoren das jeweilige Rad einen bestimmten Lenkwinkel einnimmt. Wesentlich bei dem aus der genannten Schrift bekannten Lenkantrieb ist es, dass beide Stellmotoren über das stangeförmige Stellelement miteinander (mechanisch) verbunden sind und auf dieses einwirken, so dass zusätzlich eine Kopplung der beiden Räder über das Stellelement ausgebildet ist. Insbesondere muss das Stellelement dafür ausgelegt sein, die auf beide Räder wirkenden Lenkkräfte aufzunehmen und zu übertragen. Dadurch ist ein relativ hoher mechanischer Aufwand für das Stellelement sowie ein relativ großer Raumbedarf erforderlich, um den bekannten Lenkantrieb auszubilden.

Weitere solcher "Steer-by-wire"-Lenkantriebe sind beispielsweise in der Offenlegungsschrift US 2001/032762 und in der Gebrauchsmusterschrift AT 6683 U1 offenbart.

### Offenbarung der Erfindung

Ausgehend von dem dargestellten Stand der Technik liegt der Erfindung die Aufgabe zugrunde, einen Lenkantrieb für ein Fahrzeug nach dem Oberbegriff des Anspruchs 1 derart weiterzubilden, dass ein gegenüber dem Stand der Technik vereinfachter mechanischer Aufbau bei geringem Raumbedarf ermöglicht wird.
Diese Aufgabe wird erfindungsgemäß bei einem Lenkantrieb für ein Fahrzeug mit den Merkmalen des Anspruchs 1 dadurch gelöst, dass der Lenkantrieb derart ausgebildet ist, dass im Normalbetrieb jeder der beiden Stellmotoren unmittelbar einem Rad zugeordnet ist und dieses lenkt, und dass im Normalbetrieb zwischen den beiden Rädern keine unmittelbare mechanische Verbindung ausgebildet ist.
Unter Normalbetrieb wird dabei im Rahmen der Erfindung der Zustand während des Fahrbetriebs verstanden, bei denen die beiden Stellmotoren ordnungsgemäß arbeiten, d.h. dazu in der Lage sind, einen über die mit dem Lenkrad verbundene Sensorik als Sollwert vorgegebenen Lenkwunsch des Fahrers in einen entsprechenden Lenkwinkel an dem mit dem Stellmotor verbundenen Rad umzusetzen. Erfindungsgemäß ist es somit vorgesehen, dass während eines derartigen Normalbetriebs keine mechanische Verbindung zwischen den beiden Rädern der Achse vorgesehen ist. Selbstverständlich sind die beiden Räder jedoch in üblicher Art und Weise (mittelbar) über die Radaufhängungen bzw. die Karosserie miteinander verbunden. Diese Verbindung betrifft jedoch nicht die Bewegung bzw. Verstellung der Räder über die Stellmotoren.
Vorteilhafte Weiterbildungen des erfindungsgemäßen Lenkantriebs für ein Fahrzeug sind in den Unteransprüchen aufgeführt.

Grundsätzlich problematisch ist es, dass beim Auftreten einer Fehlfunktion an einem der Stellmotoren die Position des mit dem entsprechenden Stellmotor verbundenen Rads üblicherweise nicht der Sollvorgabe entspricht. Insbesondere ist es jedoch aus Sicherheitsgründen erforderlich, während des Fahrbetriebs zur Sicherstellung der Fahrbarkeit bzw. zur Vermeidung gefährlicher Fahrmanöver einen definierten Lenkwinkel an dem Rad einzustellen bzw. vorzusehen, der mit dem Stellmotor gekoppelt ist, der eine Fehlfunktion aufweist.
Hierzu ist es erfindungsgemäß, dass beim Erkennen eines Ausfalls oder einer Fehlfunktion wenigstens eines Stellmotors Mittel vorgesehen sind, die den wenigstens einen Stellmotor in einer Sollposition positionieren, derart, dass das mit dem Stellmotor in Wirkverbindung angeordnete Rad einen Solllenkwinkel einnimmt. In der Praxis ist es dabei am sinnvollsten, wenn dieser Sollwinkel 0° beträgt, d.h., das mit dem eine Fehlfunktion aufweisenden Stellmotor gekoppelte Rad in Richtung einer Geradeausfahrt des Fahrzeugs ausgerichtet ist. Dies ermöglicht es, dass erforderliche Lenkkorrekturen über den anderen Stellmotor bzw. das andere Rad auf das Fahrzeug übertragen werden, wobei die erforderlichen Kräfte bzw. Steuercharakteristika in beide Richtungen identisch sind.

In konstruktiver Ausgestaltung des zuletzt beschriebenen Erfindung ist es vorgesehen, dass die Mittel mechanische und/oder elektrische Mittel umfassen. Unter mechanischen Mitteln können dabei im einfachsten Fall beispielsweise mit dem Stellmotor gekoppelte Getriebeelemente verstanden werden, die eine derartige Selbsthemmung aufweisen, dass die über die Selbsthemmung auf das Rad wirkende Kräfte größer sind als die von der Fahrbahn auf das Rad übertragenen, entgegen der Richtung der Selbsthemmung wirkenden Kräfte. Unter elektromotorischen Mittel können Mittel verstanden werden, die beispielsweise ein mechanisches Sperrmittel betätigen, das das Rad bzw. eine Radaufhängung in der gewünschten Sollposition positionieren und arretieren.

Die Erfindung umfasst auch ein Lenksystem für ein Fahrzeug, das einen erfindungsgemäßen Lenkantrieb aufweist. Erfindungsgemäß ist es vorgesehen, dass der Lenkantrieb an einer Vorderachse des Fahrzeugs angeordnet bzw. dieser zugeordnet ist.
In einer erfindungsgemäßen Weiterbildung des Lenksystems kann es auch vorgesehen sein, dass zusätzlich an einer Hinterachse des Fahrzeugs ein erfindungsgemäßer Lenkantrieb vorgesehen ist. Das bedeutet, dass (bei einem Fahrzeug mit vier Rädern) jedes Rad mit einem entsprechenden Stellmotor gekoppelt ist und somit eine Allradlenkung realisierbar ist. Ein derartiges System ermöglicht es insbesondere bei dem Ausfall eines einzelnen Stellmotors bzw. einer Fehlfunktion eine verbesserte Fahrbarkeit des Fahrzeugs zu gewährleisten.
Darüber hinaus ermöglicht es eine derartige Auslegung in einer weiteren vorteilhaften Ausgestaltung der Erfindung, dass eine zentrale Steuereinheit vorgesehen ist, die dazu ausgebildet ist, die einzelnen Stellmotoren der beiden Lenkantriebe zur Realisierung einer ESP-Funktion einzeln anzusteuern. Unter einer ESP-Funktion wird dabei ein elektronisches Stabilisierungssystem für das Fahrzeug verstanden, bei dem insbesondere ein Schleudern des Fahrzeugs verhindert wird.
Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte Darstellung eines mit einem erfindungsgemäßen Lenkantrieb an einer Vorderachse ausgestatteten Fahrzeugs und
- Fig. 2: eine ebenfalls vereinfachte Darstellung eines Fahrzeugs, bei dem dieses zusätzlich zur Vorderachse auch an seiner Hinterachse einen erfindungsgemäßen Lenkantrieb aufweist.

Gleiche Elemente bzw. Elemente mit gleicher Funktion sind in den Figuren mit den gleichen Bezugsziffern versehen.

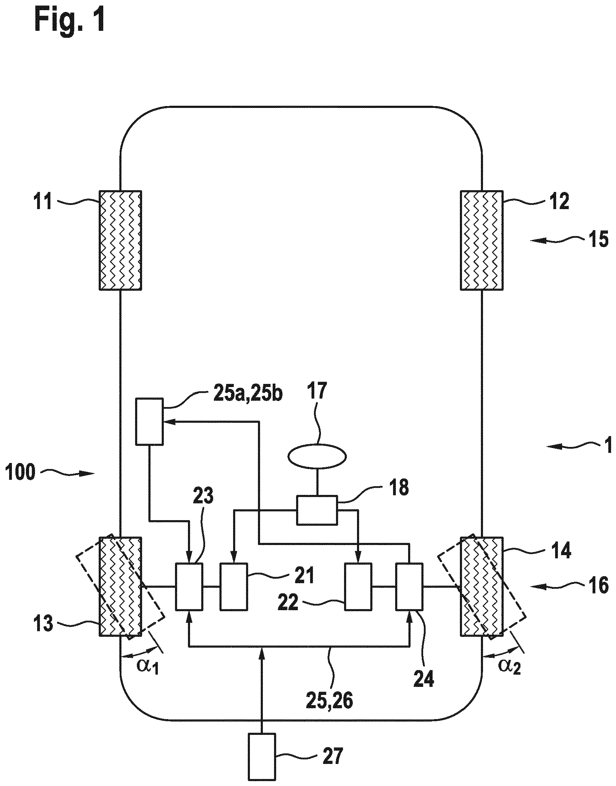

In der Fig. 1 ist ein Fahrzeug 1 dargestellt, dessen beide Hinterräder 11, 12 einer Hinterachse 15 und dessen beide Vorderräder 13, 14 einer Vorderachse 16 zugeordnet sind. In üblicher Weise dienen die beiden Vorderräder 13, 14 der Lenkung des Fahrzeugs 1. Hierzu ist es in ebenfalls bekannter Art und Weise vorgesehen, dass ein Fahrer über ein Lenkrad 17 einen Lenkwunsch als Sollwert vorgibt, wobei die Stellung des Lenkrads 17 über eine Sensoreinrichtung 18 erfassbar ist. Die Sensoreinrichtung 18 ist wiederum in Wirkverbindung mit zwei Stellmotoren 21, 22 angeordnet, die insbesondere als elektrische Stellmotoren 21, 22 ausgebildet sind.

Die Kopplung zwischen der Sensoreinrichtung 18 und den beiden Stellmotoren 21, 22 ist derart, dass der über die Stellung des Lenkrads 17 erfasste Fahrerwunsch als Sollwinkelvorgabe bzw. Sollstellung an die beiden Stellmotoren 21, 22 als Eingangswert zugeführt wird. Ferner kann es vorgesehen sein, dass die beiden Stellmotoren 21, 22 jeweils mit einer separaten Getriebeeinrichtung 23, 24 gekoppelt sind, um das von dem Stellmotor 21, 33 aufgebrachte Stellmoment zu vergrößern. Die Getriebeeinrichtungen 23, 24 sind über ein im Einzelnen nicht dargestelltes Lenkgestänge mit dem jeweiligen Vorderrad 13, 14 gekoppelt.

Ein soweit beschriebener Lenkantrieb 10 wird in der Praxis auch als "Steer-by-wire" Lenkantrieb 10 bezeichnet und ist Teil eines Lenksystems 100. Er zeichnet sich dadurch aus, dass im Gegensatz zu herkömmlichen Lenkanlagen keine Lenksäule im klassischen Sinne vorhanden ist, die den Fahrerwunsch mittel oder unmittelbar mechanisch an die Vorderräder 13, 14 überträgt.

Während des normalen Fahrbetriebs des Fahrzeugs 1 werden die Vorderräder 13, 14 in einem Winkel α₁ und α₂ verstellt, um beispielsweise eine Kurvenfahrt mit definiertem Radius durchführen zu können bzw. einen entsprechenden Fahrerwunsch umzusetzen.

Sollte es zu einer Fehlfunktion oder zu einem Ausfall eines der beiden Stellmotoren 21, 22 oder einer Getriebeeinrichtung 23, 24 kommen, so wird dies durch entsprechende Sensorik detektiert, beispielsweise dadurch, dass festgestellt wird, dass die Stellung des betreffenden Stellmotors 21, 22 nicht einer entsprechenden Sollvorgabe durch die Sensoreinrichtung 18 entspricht. In diesem Fall kann es beispielhaft darüber hinaus vorgesehen sein, dass Mittel 25 vorhanden sind, die die beiden Vorräder 13, 14 miteinander koppeln bzw. verbinden. In dem in der Fig. 1 dargestellten Ausführungsbeispiel ist es hierzu vorgesehen, dass eine Verbindungsstange 26 zwischen den beiden Getriebeeinrichtungen 23, 24 angeordnet ist, die im Falle des Ausfalls mittels eines elektrischen oder sonstigen Antriebs 27 in Wirkverbindung mit den Getriebeeinrichtungen 23, 24 gebracht wird. Es findet somit für den Fall einer Fehlfunktion oder eines Ausfalls einer der Stellmotoren 21, 22 eine mechanische Zwangskopplung der beiden Vorderräder 13, 14 über die Verbindungsstange 26 statt, derart, dass der Antrieb der beiden Vorderräder 12, 14 über den noch funktionsfähigen Stellmotor 21, 22 erfolgt.

In einer im Einzelnen nicht dargestellten Variante des Fahrzeugs 1 kann es auch vorgesehen sein, dass die Mittel 25 auch ohne eine Verbindungsstange 26 realisierbar sind, beispielsweise durch Mittel 25a, die durch eine entsprechende konstruktive Auslegung durch Selbsthemmung der Getriebeeinrichtungen 23, 24 ein Festlegen der Getriebeeinrichtungen 23, 24 und somit der Vorderräder 13, 14 in einer definierten Position ermöglichen. Alternativ kann es auch vorgesehen sein, dass Mittel 25b in Form elektrischer oder sonstiger, beispielsweise pneumatischer oder hydraulischer Mittel 25b vorgesehen sind, die ebenfalls ein Positionieren des entsprechenden Vorderrads 13, 14 in einer Sollposition ermöglichen.

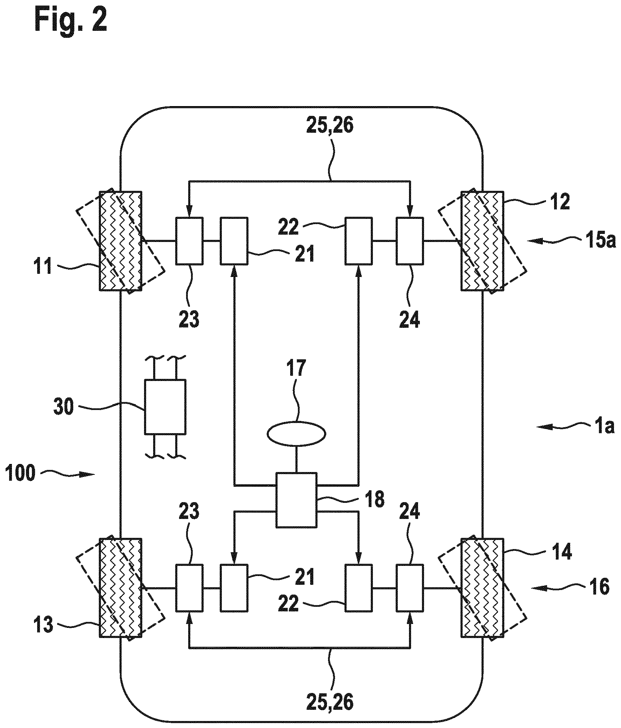

Das in der Fig. 2 dargestellte Fahrzeug 1a unterscheidet sich von dem Fahrzeug 1 gemäß der Fig.1 dadurch, dass auch an dessen Hinterachse 15a ein erfindungsgemäßer Lenkantrieb 10 vorgesehen ist. Bezüglich des Lenkantriebs 10 an der Hinterachse 15 des Fahrzeugs 1a gilt das in Bezug auf den Lenkantrieb 10 für das Fahrzeug 1 Gesagte. Die beiden Lenkantriebe 10 an der Hinterachse 15 sowie der Vorderachse 16 des Fahrzeugs 1a bilden ein Lenksystem 100 aus, bei dem sowohl die Hinterräder 11, 12 als auch die Vorderräder 13, 14 lenkbar angeordnet sind, wobei der Fahrerwunsch in Analogie zum Fahrzeug 1 über die Sensoreinrichtung 18 den Stellmotoren 21, 22 an der Hinterachse 15 sowie der Vorderachse 16 als Sollwert vorgegeben wird. Darüber hinaus weist das Fahrzeug 1a eine Steuereinrichtung 30 auf, die ebenfalls in Wirkverbindung mit den Stellmotoren 21, 22 an der Hinterachse 15 sowie der Vorderachse 16 angeordnet ist, derart, dass durch die Steuereinrichtung 30 eine ESP-Funktionalität realisierbar ist, bei der die über die Sensoreinrichtung 18 den Stellmotoren 21, 22 vorgegebenen Lenkwinkel derart beeinflusst werden, dass die Fahrzeugstabilität bzw. Fahrbarkeit des Fahrzeugs 1a erhöht wird.

Die soweit beschriebenen Lenkantriebe 10 bzw. die Lenksysteme 100 können in vielfältiger Art und Weise abgewandelt werden, ohne vom Erfindungsgedanken abzuweichen.

## Patentansprüche

1. Lenkantrieb (10) für ein Fahrzeug (1; 1a), mit einer von einem Fahrer bedienbaren Steueranordnung (17) und zwei, jeweils mit einem Rad (11 bis 14) zumindest mittelbar gekoppelten Stellmotoren (21, 22), wobei die Verbindung der Steueranordnung (17) mit den Stellmotoren (21, 22) ohne mechanische Kopplung erfolgt,
wobei der Lenkantrieb (10) derart ausgebildet ist, dass im Normalbetrieb jeder der beiden Stellmotoren (21, 22) unmittelbar einem Rad (11 bi s14) zugeordnet ist und dieses lenkt, und dass im Normalbetrieb zwischen den beiden Rädern (11 bis 14) einer Achse (15, 16) keine unmittelbare mechanische Verbindung ausgebildet ist,
**dadurch gekennzeichnet,**
**dass** beim Erkennen eines Ausfalls oder einer Fehlfunktion wenigstens eines Stellmotors (21, 22) Mittel (25; 25a; 25b) vorgesehen sind, die den wenigstens einen Stellmotor (21, 22) in einer Sollposition positionieren, derart, dass das mit dem wenigstens einen Stellmotor (21, 22) in Wirkverbindung angeordnete Rad (11 bis 14) einen Solllenkwinkel einnimmt.

2. Lenkantrieb nach Anspruch 1,
**dadurch gekennzeichnet,**
**dass** die Mittel (25; 25a; 25b) mechanisch und/oder elektrische Mittel (25; 25a; 25b) umfassen.

3. Lenksystem (100) für ein Fahrzeug (1; 1a), umfassend einen Lenkantrieb (10) nach einem der Ansprüche 1 bis 2, **dadurch gekennzeichnet, dass** der Lenkantrieb (10) einer Vorderachse (16) des Fahrzeugs (1; 1a) zugeordnet ist.

4. Lenksystem nach Anspruch 3,
**dadurch gekennzeichnet,**
**dass** zusätzlich an einer Hinterachse (15) des Fahrzeugs (1a) ein Lenkantrieb (10) nach einem der Ansprüche 1 bis 2 vorgesehen ist.

5. Lenksystem nach Anspruch 4,
**dadurch gekennzeichnet,**
**dass** eine Steuereinheit (30) vorgesehen ist, die dazu ausgebildet ist, die die einzelnen Stellmotoren (21, 22) der beiden Lenkantriebe (10) zur Realisierung einer ESP-Funktion einzeln anzusteuern.

## Claims

1. Steering drive (10) for a vehicle (1; 1a) having a control arrangement (17) which can be operated by a driver, and two servomotors (21, 22) which can each respectively be at least indirectly coupled to a wheel (11 to 14), wherein the connection of the control arrangement (17) to the servomotors (21, 22) is made without a mechanical coupling,
wherein the steering drive (10) is embodied in such a way that in the normal operating mode each of the two servomotors (21, 22) is assigned directly to a wheel (11 to 14) and steers the latter, and in that in the normal operating mode a direct mechanical connection is not formed between the two wheels (11 to 14) of an axle (15, 16),
**characterized**
**in that** when a failure or a malfunction of at least one servomotor (21, 22) is detected, means (25; 25a; 25b) are provided which position the at least one servomotor (21, 22) in a setpoint position in such a way that the wheel (11 to 14) which is arranged in an operative connection to the at least one servomotor (21, 22) assumes a target steering angle.

2. Steering drive according to Claim 1,
**characterized**
**in that** the means (25; 25a; 25b) comprise mechanical and/or electrical means (25; 25a; 25b).

3. Steering system (100) for a vehicle (1; 1a) comprising a steering drive (10) according to one of Claims 1 to 2, **characterized in that** the steering drive (10) is assigned to a front axle (16) of the vehicle (1; 1a).

4. Steering system according to Claim 3,
**characterized**
**in that** a steering drive (10) according to one of Claims 1 to 2 is additionally provided on a rear axle (15) of the vehicle (1a).

5. Steering system according to Claim 4,
**characterized**
**in that** a control unit (30) is provided which is designed to actuate individually the individual servomotors (21, 22) of the two steering drives (10) in order to implement an ESP function.

## Revendications

1. Mécanisme d'entraînement de direction (10) pour un véhicule (1; 1a), comprenant un arrangement de commande (17) pouvant être actionné par un conducteur et deux servomoteurs (21, 22) respectivement couplés au moins indirectement avec une roue (11 à 14), la liaison de l'arrangement de commande (17) avec les servomoteurs (21, 22) s'effectuant sans couplage mécanique,
le mécanisme d'entraînement de direction (10) étant configuré de telle sorte qu'en fonctionnement normal, chacun des deux servomoteurs (21, 22) est associé directement à une roue (11 à 14) et braque celle-ci, et qu'en fonctionnement normal aucune liaison mécanique directe n'est formée entre les deux roues (11 à 14) d'un essieu (15, 16),
**caractérisé en ce**
**qu'**en cas de reconnaissance d'une panne ou d'un défaut de fonctionnement d'au moins un servomoteur (21, 22), des moyens (25 ; 25a ; 25b) sont présents qui positionnent l'au moins un servomoteur (21, 22) dans une position de consigne de telle sorte que la roue (11 à 14) qui est disposée en liaison fonctionnelle avec l'au moins un servomoteur (21, 22) adopte un angle de braquage de consigne.

2. Mécanisme d'entraînement de direction selon la revendication 1, **caractérisé en ce que** les moyens (25 ; 25a ; 25b) comprennent des moyens (25 ; 25a ; 25b) mécaniques et/ou électriques.

3. Système de direction (100) pour un véhicule (1 ; 1a), comprenant un mécanisme d'entraînement de direction (10) selon l'une des revendications 1 à 2, **caractérisé en ce que** le mécanisme d'entraînement de direction (10) est associé à un essieu avant (16) du véhicule (1 ; 1a).

4. Système de direction selon la revendication 3,
**caractérisé en ce qu'**un mécanisme d'entraînement de direction (10) selon l'une des revendications 1 à 2 se trouve en plus sur un essieu arrière (15) du véhicule (1a) .

5. Système de direction selon la revendication 4,
**caractérisé en ce qu'**une unité de commande (30) est présente, laquelle est conçue pour exciter individuellement les servomoteurs (21, 22) individuels des deux mécanismes d'entraînement de direction (10) en vue de réaliser une fonction ESP.
